# EUROPEAN PATENT SPECIFICATION

(11) **EP 0 426 159 B1**
(45) Date of publication and mention of the grant of the patent: **05.06.1996**
(21) Application number: 90120918.9
(22) Date of filing: 31.10.1990
(51) Int. Cl.: G03B 17/30

(54) **Self-advancing film cassette**
Selbstvorrückende Filmkassette
Cassette de film à avancement automatique

(30) Priority: 02.11.1989 JP 286725/89; 13.11.1989 JP 294435/89; 23.02.1990 JP 43736/90
(43) Date of publication of application: 08.05.1991
(73) Proprietor: FUJI PHOTO FILM CO., LTD., Kanagawa-ken (JP)
(72) Inventor: Takahashi, Koichi, c/o Fuji Photo Film Co., Ltd., Minami Ashigara-shi, Kanagawa (JP); Kitagawa, Kuniharu, c/o Fuji Photo Film Co., Ltd., Minami Ashigara-shi, Kanagawa (JP); Kataoka, Hideaki, c/o Fuji Photo Film Co., Ltd., Minami Ashigara-shi, Kanagawa (JP); Takahashi, Tomoyuji, c/o Fuji Photo Film Co., Ltd., Minami Ashigara-shi, Kanagawa (JP)
(74) Representative: Grünecker, Kinkeldey, Stockmair & Schwanhäusser Anwaltssozietät

(56) References cited:
- EP-A- 0 421 097
- FR-A- 926 241
- FR-A- 1 477 288
- FR-A- 2 078 703
- US-A- 1 519 536
- US-A- 4 834 306
- US-A- 4 846 418
- US-A- 4 948 063
- PATENT ABSTRACTS OF JAPAN, vol. 6, no. 203 (P-148)[1081], 14th October 1982 & JP-P-57 109 933

## Description

This invention relates to a self-advancing film cassette comprising a spool, a film roll of a photographic film wound around said spool, a cassette shell for rotatably supporting said spool, prevention means for preventing said film roll from being loosened, said photographic film being advanced through a film passage mouth formed in said cassette shell and a separation claw within said cassette shell for separating an end of a film leader from the roll of film.

At present, a film cassette containing a roll of photographic film strip of 135 type (35mm in width) is most widespread. This film cassette comprises a light tight cylindrical cassette shell provided with a film passage mouth, a spool rotatably contained in the cassette shell, and a film roll coiled on the spool. The film leader is in a state protruded from the film passage mouth. When loading the film cassette in a camera, the film leader is brought into engagement with a threading member of the camera and by driving the threading member, the film is pulled out from the cassette shell and fed to a film take-up chamber so as to be wound on a take-up spool in this chamber.

In recent years, in order to meet such a demand as to make the film cassette compact and easy to handle, a self-advancing film cassette is proposed in which the entire film is contained in the cassette shell and the film leader is advanced from the film passage mouth in accordance with rotation of the spool. Fig. 25 shows a schematic view of a self-advancing film cassette described in USP 4,832,275. A spool 2 rotatably contained in a cassette shell (not shown) has a film 1 wound on its outer periphery to form a film roll 3. Furthermore, the film roll 3 has a pair of restriction rings 5 and 6 fitted to the outermost peripheral surface thereof out of the vertical relative to the film roll 3 in order to restrict the loosening of the film roll 3. The distance between the pair of restriction rings 5 and 6 is great in the vicinity to with a film port 9 provided with a film passage mouth (not shown), so that a film leader end 1a can pass therethrough. These restriction rings 5 and 6 are engaged in slant grooves formed in the inner wall of the cassette shell. Also, a pair of separation claws 7 and 8 are integrally provided on the film port 9 so as to be contacted with the outermost peripheral surface of the film roll 3.

When the spool 2 is rotated in the unwinding direction, the film roll 3 is loosened a little if there is a tiny gap between the restriction rings 5 and 6 and the outermost peripheral surface of the film roll 3. However, the loosening of the wound film is immediately restricted by the restriction rings 5 and 6, and the film roll 3 and the restriction rings 5 and 6 are rotated together with the spool 2 thereafter. And when the film leader end 1a reaches a position close to the film port 9, it is separated from the film roll 3 by the separation claws 7 and 8. And this film leader end 1a is advanced outside the cassette shell through the film passage mouth.

A self-advancing film cassette described in USP 4,834,306 is constructed such that ring-shaped rims are provided on the peripheral edges of a pair of flanges disposed on a spool, and by the rims receiving the side edge of the outermost periphery of the film roll, loosening of the film is prevented. Furthermore, a pair of triangular separation claws are disposed to the film port such that the front ends thereof are engageable with the film leader end and the side edges thereof push the pair of flanges outwardly to relieve the film from the restriction of the rims, so that the film leader end separated from the film roll is guided to the film passage mouth.

In general, the film leader is frequently stuck to a film portion thereunder due to curling after long time reservation of the film, leaving under conditions of high temperature and high humidity, static electric charge, trouble during transportation, etc. In such a case, in the afore-mentioned conventional self-advancing film cassette, it becomes impossible to surely separate the film leader from the film roll so as to be advanced from the film passage mouth. Also, it sometimes happens that only one of the separation claws separates the film leader and the other fails to do so. In that case, as the film leader clogs the film passage mouth, if the spool keeps rotation, jamming of the film takes place within the cassette shell.

A film cassette of the initially mentioned type is known from US-A-48 46 418. This known film cassette is however unsatisfactory as regards the separation of the leading end from the film roll.

It is therefore an objective of the present invention to provide an improved film cassette of the above-mentioned type, that is capable of smoothly separating a film leader from a roll of film without damaging the light sensitive surface of the film with high reliability.

According to the present invention, this objective is performed in that the separation claw is disposed outside the area of the photographic film where a picture frame is formed, a guide projection is formed on an inner surface of a port portion of said cassette shell adjacent to said separation claw and extending towards said film passage mouth, said guide projection being provided outside said picture frame area on the same side of the port portion as the separation claw, and a groove is formed in a base portion of said separation claw so as to provide a springy characteristic to said separation claw, such that said separation claw is biased towards said film roll.

The flexible separation claw arrangement disposed outside the picture frame area permits a smooth separation of the film leader from the roll of film with high reliability.

Preferred embodiments of the present invention are laid down in dependent claims.

Hereinafter, the present invention will be explained and illustrated in greater detail by means of preferred embodiments of the invention in conjunction with accompanying drawings, wherein:
Fig. 1 is a side sectional view of a film cassette not embodying the invention in which the separation claw is improved in configuration to attain the separation of the film leader;
Fig. 2 is a perspective view showing the construction of an important portion of the cassette shown in Fig. 1;
Fig. 3 is an explanatory view showing the contacting state between the separation claw and the face of the film leader end;
Fig. 4 is a sectional view of an important portion showing one embodiment of the present invention in which a groove is formed in the base portion of the separation claw;
Fig. 5 is a sectional view showing a film cassette not embodying the invention , in which the film leader is deformed into a corrugation;
Fig. 6 is a perspective view of the roll of film shown in Fig. 5;
Figs. 7 through 10 are perspective views respectively showing the embodiments of the present invention, in which the film leaders are deformed;
Fig. 11 is a perspective view showing one embodiment of the present invention, in which the film leader end is cut with bias;
Figs. 12 through 15 are perspective views respectively showing the embodiments of the present invention, in which the film leader is increased in rigidity;
Fig. 16 is a side sectional view of a film cassette of the present invention, in which the roll of film is nipped with the flange of the spool in order to prevent the roll of film from being loosened;
Figs. 17 through 19 are perspective views respectively showing a film roll, in which the film leader is formed narrow in width;
Fig. 20 is a perspective view showing the relation between the film leader and the guide rail of a camera;
Fig. 21 is a perspective view showing the inner construction of a film cassette not embodying the invention, in which one separation claw is provided;
Fig. 22 is a sectional view showing the inner construction of the film cassette shown in Fig. 21;
Fig. 23 is an explanatory view showing the relation between the separation claw and the film leader;
Fig. 24 is a view similar to Fig. 21 showing a state where the film leader end exceeds the separation claw; and

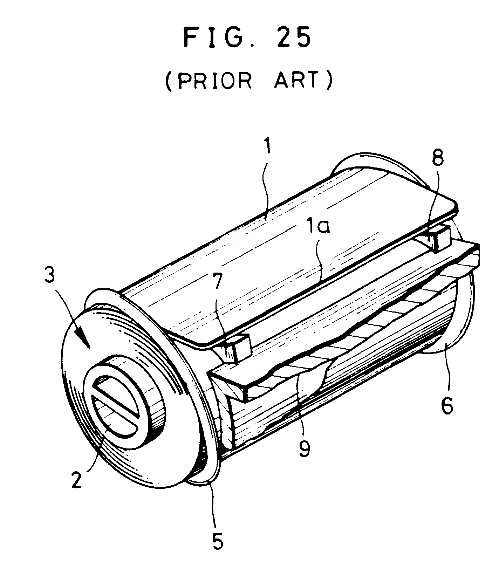

Fig. 25 is a perspective view showing an important portion of the conventional film cassette.

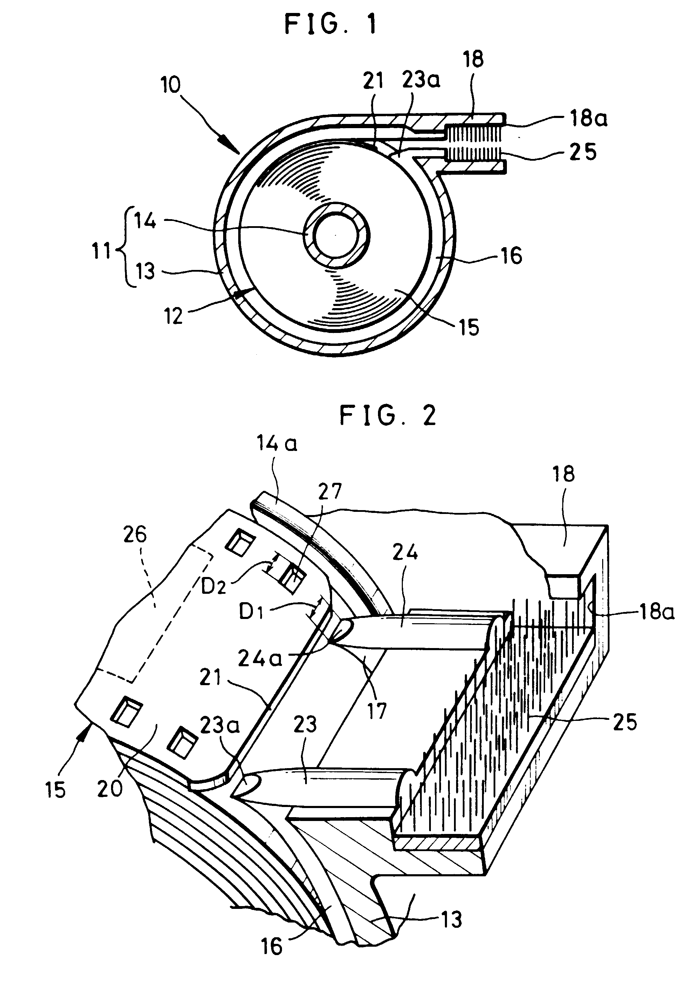

In Fig. 1, a film cassette 10 representing no embodiment of the invention comprises a light-tight cassette 11, and a roll of film 12 contained in the cassette 11. The cassette 11 comprises a plastic cassette shell 13 having a light prohibiting property, and a plastic spool 14 rotatably contained therein. The roll of film 12 comprises a film 15 of, for example, 135 type wound on the outer periphery of the spool 14 and is disposed between a pair of flanges (see Fig. 2), a trailing end of the film 15 being fixed to the spool 14. Actually, the cassette shell 13 comprises a pair of shell halves separately formed, the pair of shell halves being integrally spliced after the spool 14 having the roll of film 12 has been loaded therein.

The cassette shell 13 is provided with ring-like ridges 16 and 17 integrally formed along the inner wall thereof, the ridges 16 and 17 being adapted to abut against the outermost peripheral surface of the roll of film 12 in order to prevent the roll of film 12 from being loosened. Also, the cassette shell 13 is provided with a port portion 18 having a film passage mouth 18a, and a passage leading to the interior of the cassette shell 13 from the film passage mouth 18a is provided with a pair of guide projections 23 and 24 adapted to separate an end 21 of a film leader 20 from the roll of film 12 and disposed connected to the ridges 16 and 17. A flush 25 for trapping light directed into the cassette 11 is mounted on the film passage mouth 18a.

As is shown in Fig. 2, a pair of separation claws 23a and 24a are integrally formed on the tips of the guide projections 23 and 24. The separation claws 23a and 24a are disposed at a portion away from the frame area of the film 15, for example, in such a manner as to face on perforations 27 in order not to injure a picture frame 26 to be formed. The widths D₁ of the separation claws 23a and 24a are formed greater than the widths D₂ of the perforations 27 so that the separation claws 23a and 24a will not enter the perforations 27.

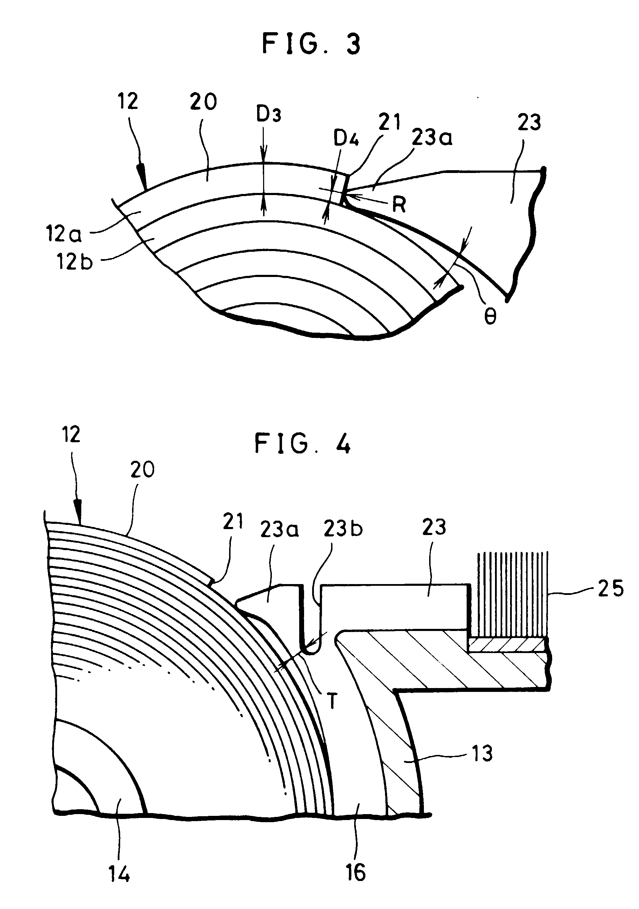

As is shown in Fig. 3, in order to have the separation claws 23a and 24a surely abut against the film leader end 21, the radii of curvature R of the separation claws 23a and 24a are set in a range from 0.02mm to 0.5mm, and preferably from 0.04mm to a half of the thickness D₃ of the film 15. Also, it is desired that the distance D₄ from the position where the separation claws 23a and 24a are abutted against the end face of the film leader end 21 to the outer surface of a second layer 12b on the inner side of outermost peripheral layer 12a is set to 2/3 or less of the film thickness D₃ and preferably to 1/2 or less. Also, it is desired that the angles θ formed between the separation claws 23a and 24a and the second layer 12b are set in a range from 0 to 30 degrees and preferably to 0 degree. Furthermore, the separation claws 23a and 24a are formed smooth so as not to injure the surface of the film 15. In addition, the smooth surfaces of the separation claws 23a and 24a are hard chrome-plated. Also, in order to help the film leader end 21 easily climb over the upper surfaces of the separation claws 23a and 24a after the film leader end 21 has been separated from the second layer 12b, the upper surfaces of the separation claws 23a and 24a are finished into inclined planar surfaces.

When such constructed film cassette 10 is loaded into a camera (not shown), the spool 14 is connected to a spool driving shaft (not shown). when the film loading has been finished, the spool driving shaft is rotated to rotate the spool 14 in the unwinding direction. At that time, although the roll of film 12 tends to get loosened, rotation of the spool 14 is transmitted up to the film leader 20, as the edge portions of both sides of the outermost peripheral surface are restricted by the ring-like ridges 16 and 17. As a result, the spool 14 is rotated together with the roll of film 12.

While the spool 14 is being rotated together with the roll of film 12, the front of the film leader end 21 is brought into contact with the separation claws 23a and 24a as shown in Fig. 3. When the spool 14 is further rotated from that state, the second layer 12b and lower film layers are rotated, but the film leader 20 forming the first layer 12a climbs over the planar upper portions of the guide projections 23 and 24 in order to enter into the film passageway. Furthermore, the film leader 20 is moved outside the cassette 11 passing through the film passage mouth 18a, then advanced into the film take-up chamber, and wound about the film take-up spool. When the spool 14 is rotated in the winding direction after recording images on to all the frames, the film 15 after exposure is wound about the spool 14. At this time the film leader end 21 is entirely drawn back in the cassette shell 13.

The first layer 12a sometimes sticks to the second layer 12b owing to curling habit of the film itself, high temperature, high humidity, etc. Even in such a case, the separation claws 23a and 24a are capable of separating the first layer 12a from the second layer 12b with high reliability. That is, the first layer 12a is made free from the second layer 12b at a portion apart from the film leader end 21 when the separation claws 23a and 24a abut the front of the film leader end 21. However, as the separation claws 23a and 24a abut the film at a portion 1/3 or more when measured from the outer surface of the film, the front of the film leader end 21 is slid up along the separation claws 23a and 24a and climbed over the guide projections 23 and 24. Accordingly, it never happens that the film leader end 21 is slid downward along the separation claws 23a and 24a and caught under the guide projections 23 and 24.

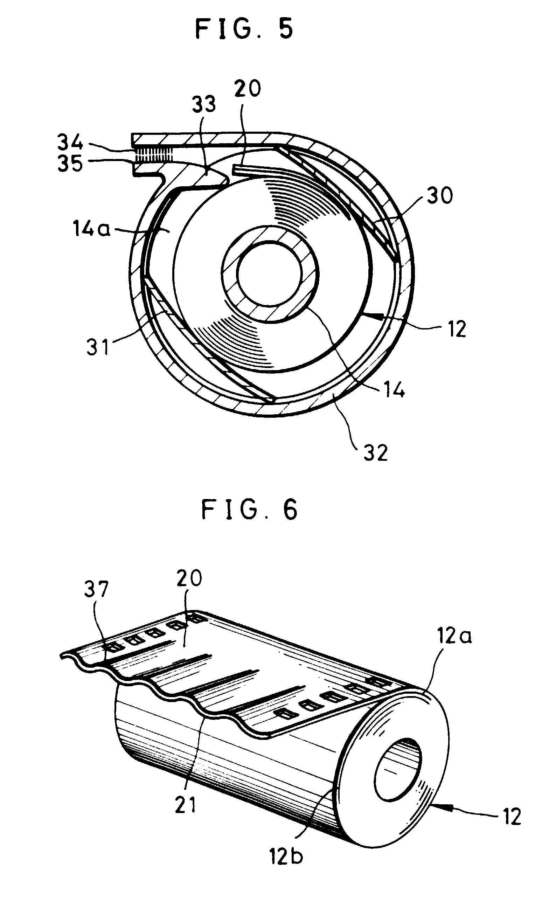

Fig. 4 shows an embodiment of the invention, and members similar to those in the embodiment of Figs. 1 through 3 are denoted by like reference numerals. In this embodiment, a groove 23b extending up to a ridge 16 is formed in order to give a spring property to a separation claw 23a of the guide projection 23. The thickness T between the bottom of this groove 23b and the surface of the ridge 16 is preferably 1.0mm or less. Since the separation claw 23a is movable in the radial direction of a spool 14 by use of the groove 23b, the separation claw 23a can be brought into contact with the surface of the roll of film 12 without fail for advancing the film leader 20. Owing to the foregoing arrangement, the film leader 20 can be separated with high reliability even when the roll of film 12 is in the sticking state and it never occurs that the separation claw 23a contacts with the outermost peripheral surface of the roll of film 12 very hard to injure the film 15. Also, it is preferable that the width of the groove 23b is formed small so that the film leader end 21 will not fall into the groove 23b, or an edge of the opening defined by the groove 23b in the vicinity of the film passage mouth 18a is cut at an angle so that it will be easily escaped from the groove 23b. The other separation claw 24a has the same construction as the claw 23a.

Besides the method for modifying the configurations of the separation claws 23a and 24a into special forms in order to separate the film leader 20 from the roll of film 12 with high reliability, there is another method for attaining the same purpose, in that the film leader 20 is so constructed as to be difficult to be stuck to the roll 12 of film. Naturally the employment of these two constructions will bring even greater effects. Fig. 6 shows one embodiment in which a corrugating treatment is applied to the film leader, and members similar to those of the afore-mentioned embodiment are denoted by like reference numerals. In the cassette shown in Fig. 5, which represents no embodiment of the invention, two pairs of metal or plastic elongated resilient plates are used instead of the ridges 16 and 17, and by urging the outer periphery of the roll of film 12 with these resilient plates, the roll of film 12 is prevented from being loosened. Fig. 5 depicts only one pair of resilient plates 30 and 31, in which both ends of the resilient plates 30 and 31 are fixed to the inner wall of the cassette shell 32, respectively. These resilient plates 30 and 31 are applied on their surfaces contacting with the roll of film 12 with lubricant for reducing friction generated between the surface and the roll of film 12. The separation claws 33 for separating the film leader end 21 are provided one each to both sides of the inner wall of the cassette shell 32. In order not to injure the roll of film 12, the separation claw 33 is formed comparatively large in radius of curvature and smooth in surface thereof. The reference numeral 34 denotes a plush and 35 a film passage mouth.

As shown in detail in Fig. 6, there are formed a plurality of corrugated deformations 37 extending in the longitudinal direction of the film from the film leader end 21, so that the first layer 12a will not be stuck to the second layer 12b. Such deformation 37 into a corrugation can easily be obtained, for example, by clamping the film leader 20 from both sides with a corrugating metal press, and pressurizing and heating the same. Also, the size of the corrugated deformation 37 in the direction of thickness thereof is large enough for the film leader end 21 to easily pass through the film passage mouth 6.

In this embodiment, since the roll of film 12 is urged with the two pairs of resilient plates, the roll of film 12 is rotated together with the spool 14 when the spool 14 is rotated in the unwinding direction. Since the corrugated deformation 37 is formed on the film leader 20, the film leader end 21 is not stuck to the second layer 12b. As a result, the film leader end 21 is easily separated from the roll of film 12 by the separation claw 33 and is not advanced outside the cassette shell 32.

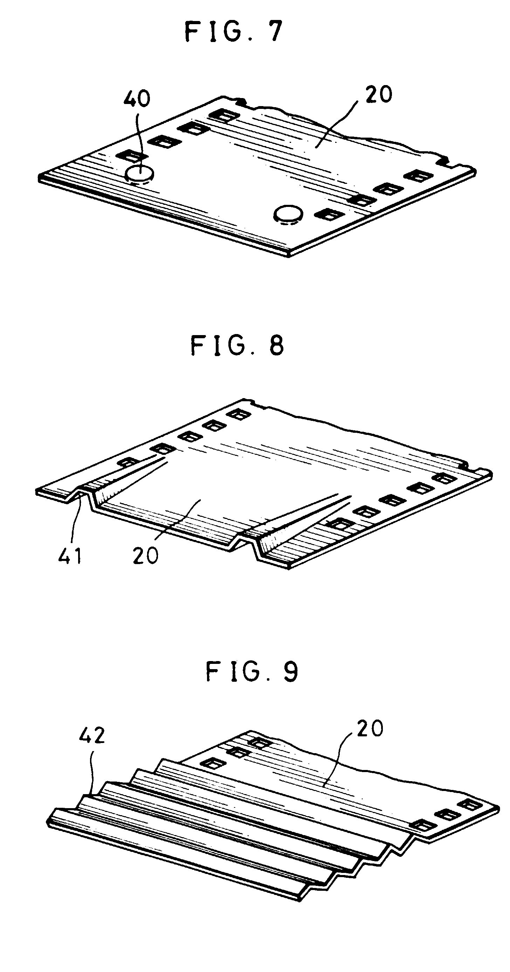

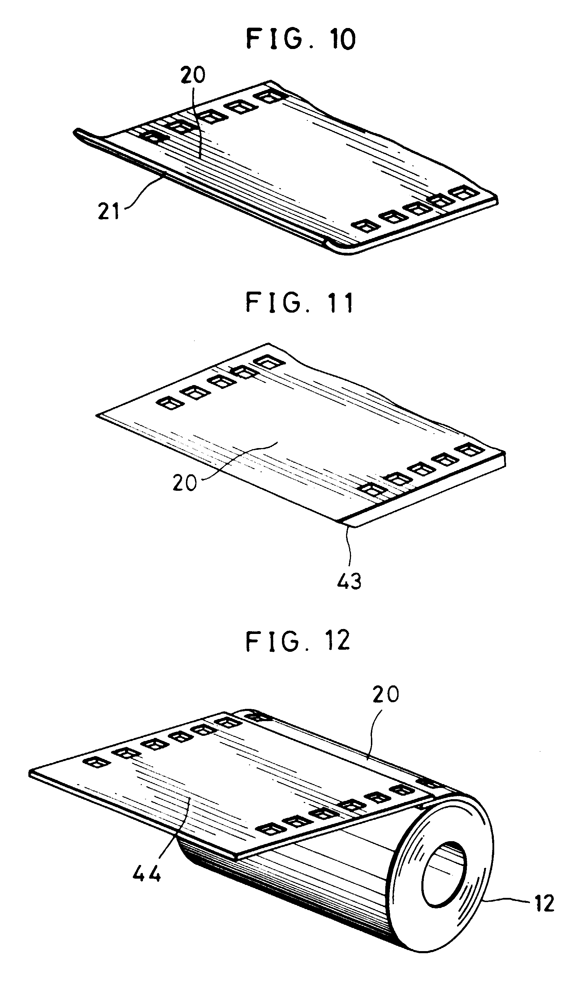

To prevent the film leader end 21 from being stuck to the roll of film 12, there are other ways of deformation besides the corrugated deformation, such as a small projection 40 as shown in Fig. 7, a wedge form 41 as shown in Fig. 8, and a zig-zag form 42 as shown in Fig. 9, all being formed by embossing. Also, as is shown in Fig. 10, the film leader end 21 may be curved or bent in the direction departing from the roll of film 12. It is also effective to cut the surface of the film leader end diagonally to form a bias cut portion 43 where an upper surface projects as shown in Fig. 11. In the embodiment shown in Fig. 12, a leader member 44 having a higher rigidity than that of the film leader 20 is spliced to the film leader 20. As this leader member 44 has a strong power to become straight and is difficult to have a state keeping a roll-curled form, the leader member 44 is not stuck to the roll of film 12.

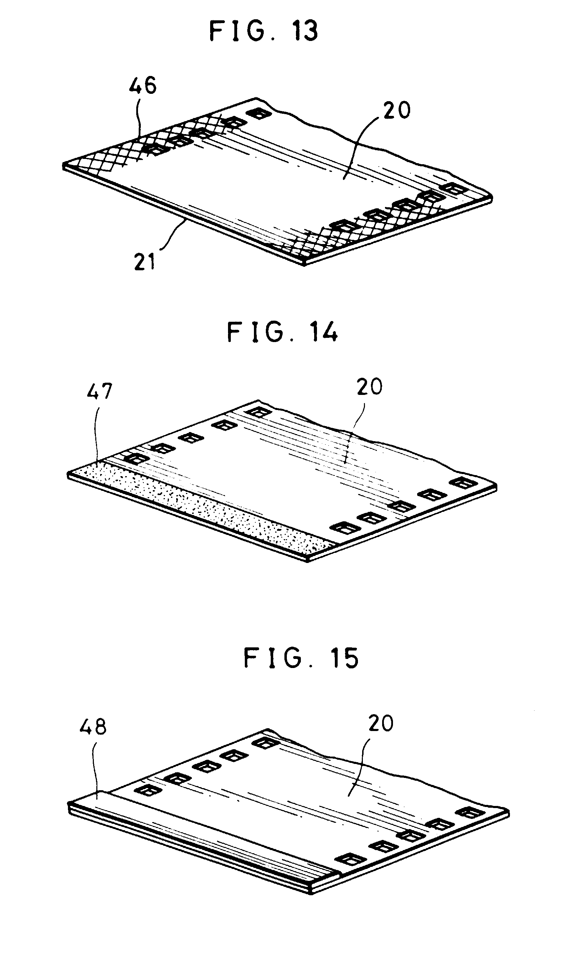

In the embodiment shown in Fig. 13, a knurling 46 is each applied to both edge portions of the film leader 20 in order to prevent the film leader 20 from being stuck to the roll of film 12. Fig. 14 depicts another embodiment in which the film leader 20 is hardened by heating, or a hardened portion 47 is formed on the film leader 20 by applying resin, etc. In another embodiment illustrated in Fig. 15, a strip-shaped reinforcing member 48 is spliced to the film leader 20. It is more effective if a bias cut similar to that as shown in Fig. 11 is applied to the tip portion in the embodiments shown in Figs. 13 through 15.

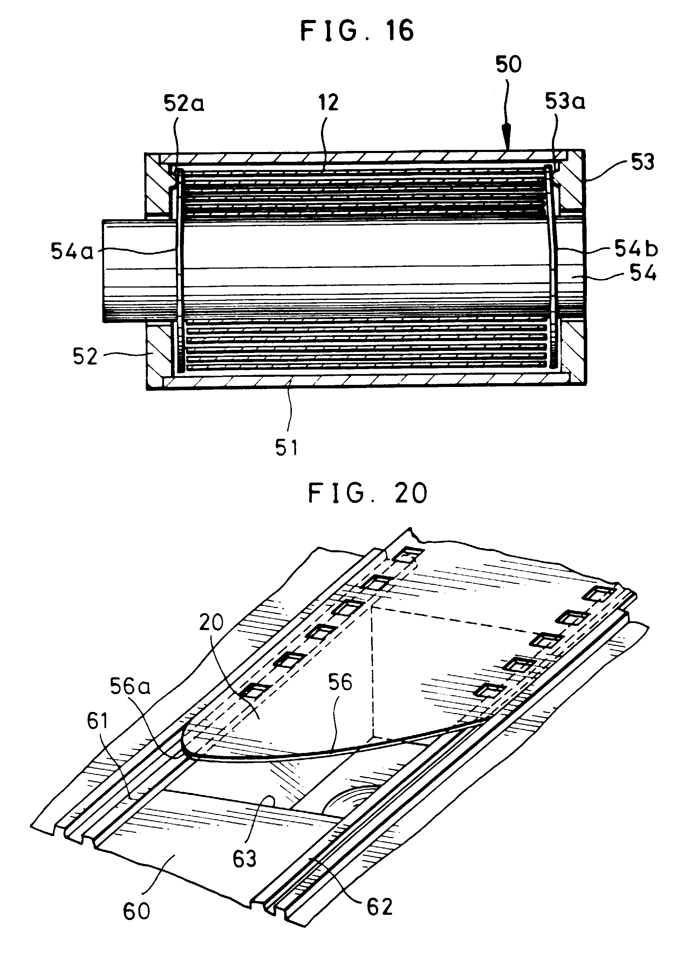

Fig. 16 shows another embodiment in which the roll of film is prevented from being loosened by nipping the roll of film between flanges of a spool. A cassette shell 50 comprises a cylinder 51 provided with a film passage mouth (not shown), a pair of side plates 52 and 53 mounted light-tight on both sides of the cylinder 51, and a spool 54 rotatably supported by the pair of side plates 52 and 53. Ring-like ridges 52a and 53a are formed on the inner surface of the side plates 52 and 53 but at a portion not close to the film passage mouth. In a case as shown in Fig. 16, upper portions of the flanges 54a and 54b are deformed inwardly by the pair of ridges 52a and 53b to nip a part of the roll of film 12. Since this roll of film 12 is nipped by the flanges 54a and 54b, the roll of film 12 is rotated together with the spool 54 to feed the film leader 20. The guide projections as shown in Figs. 1 through 3 are formed on the film passage mouth.

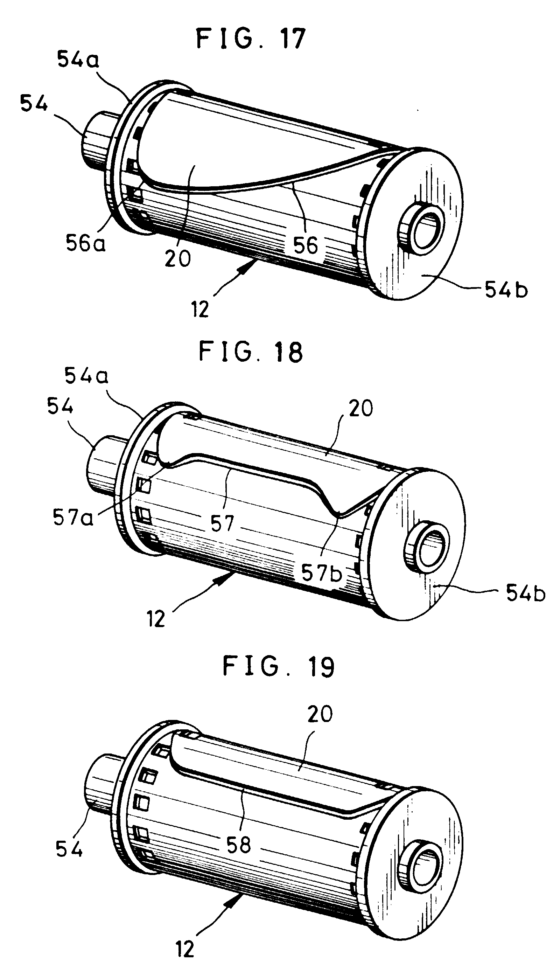

When a film cassette as shown in Fig. 16 is used, if the width of the film leader 20 is formed smaller as shown in Figs. 17 through 19, both side edges of the film leader 20 receive no pressure from the flanges 54a and 54b. Owing to the foregoing arrangement, the film leader 20 tends to become straight by its own resiliency and a gap is formed between the second layer and itself, it becomes possible to separate the film leader 20 from the roll of film 12 with high reliability. Naturally, it may be constructed such that the afore-mentioned improvement of separation claws and the sticking prevention structure of the film leader are commonly used.

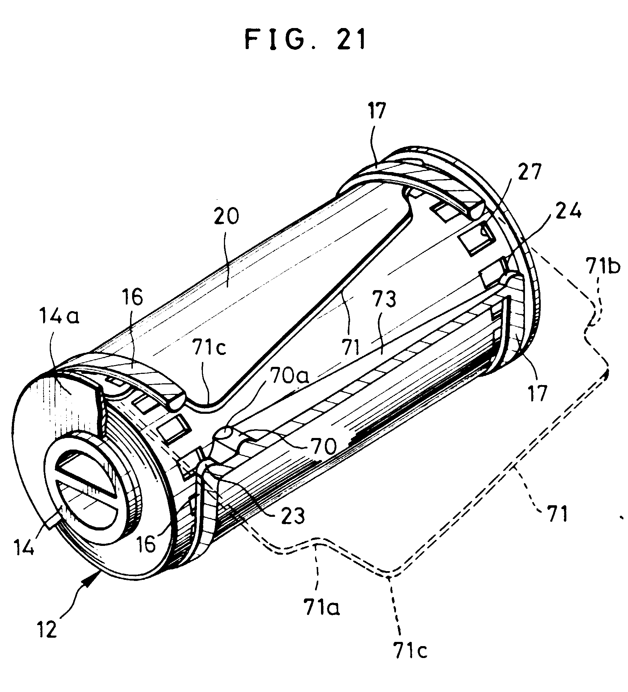

In the embodiment shown in Fig. 17, a film leader end 56 is formed to have an inclined curve. In this film leader end 56, the most projected portion 56a as shown in Fig. 20 is climbed over an inner guide rail 61 of an aperture frame 60 of a camera. This serves to prevent a disableness of supply caused by the most projected portion 56a entering into an exposure aperture 63.

In the embodiment shown in Fig. 18, both side portions 57a and 57b of a film leader end 57 are projected like horns. Since these two horn portions climb over both of the inner guide rails 61 and 62, the film leader end 57 can be prevented from falling into the exposure aperture 63 with high reliability. In the embodiment shown in Fig. 19, both sides of the film leader end 58 are cut off. Also in this film leader end 58, the film leader end 58 is required to be cut in order not to fall into the exposure aperture 63.

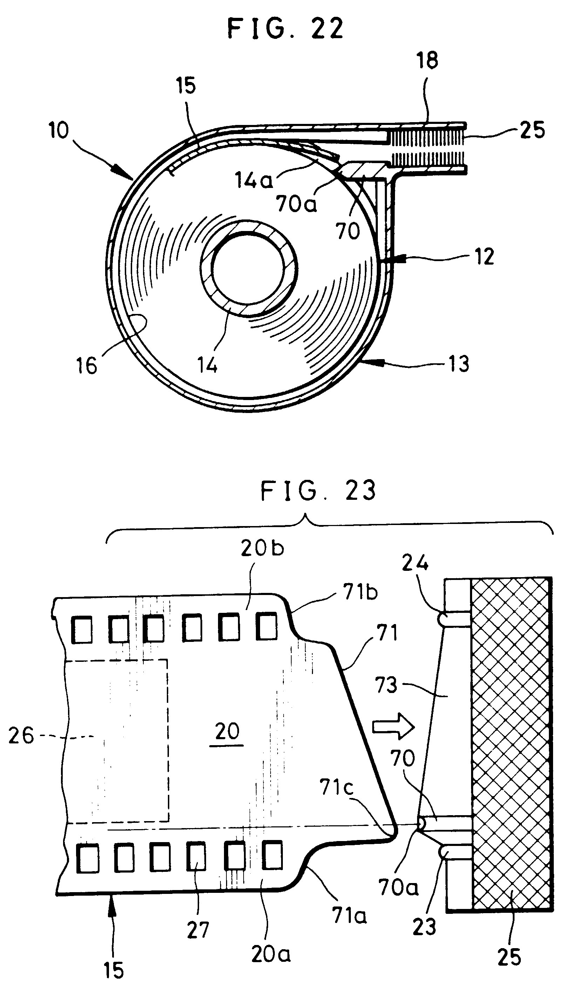

In case a couple of separation claws are provided, it may happen that only one of the separation claws separates the film leader. In that case, the film leader is twisted and clogs the film passage, thereby to generate jamming of the film. Figs. 21 through 24 depict a cassette representing no embodiment of the invention in which one separation claw is provided. In this cassette like the cassette shown in Figs. 1 through 3, a pair of ridges are disposed within the cassette shell in order to prevent the roll of film from being loosened. Therefore, members similar to those shown in Figs. 1 through 3 are denoted by like reference numerals. A guide projection 70 is provided on the cassette shell 13 at a position away from the picture frame 26, for example a position beside the ridge 16, and a separation claw 70a is formed on the tip of the guide projection 70. In order to make a portion 71c of the entire film leader end 71 facing with the separation claw 70a reach the separation claw 70a first, the film leader end 71 is diagonally cut from the left side portion 20a toward the right side portion 20b in the drawings. also, cuts 71a and 71b are formed in the left and right sides of the film leader end 71, so that the film leader end 71 will not be stuck to the roll of film 12. That is, since these cut 71a and 71b portions are not urged by the ridges 16 and 17, the film leader end 71 is loosened to a degree from the roll of film 12 owing to resiliency of the film itself. Owing to the foregoing, the separation claw 70a can surely scoop up the film leader end 71 and fed it to the film passage mouth.

Operation of the above embodiments will be described next briefly. When the spool 14 is rotated in the unwinding direction, the roll of film 12 is rotated together with the spool 14. The film leader end 71 is scooped up at the most projected portion 71c thereof and climbs over the guide projection 70. When the spool 14 is further rotated, the film leader end 71 gradually climbs over the guide plate 24 from the cut 71a toward the other cut 71b. When the spool 14 keeps further rotating, the film leader 20 is slid over the guide projections 23, 24 and 70 and advanced toward the film passage mouth. Since the guide plate 73 is lower than the guide projections 23, 24 and 70, the guide plate 24 does not contact with the film 15 after the film leader 20 has been separated and therefore, it does not reach the film 15 and no injury is given thereto.

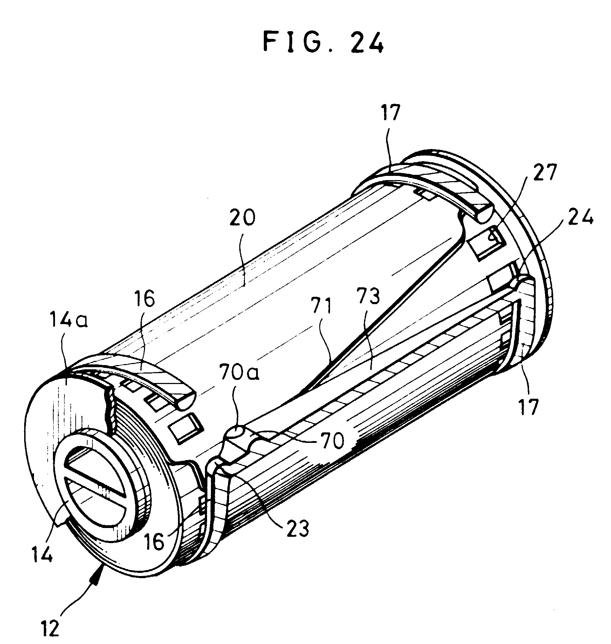

On the other hand, in the case of a state as shown in Fig. 24, since the projected portion 71c passes the separation claw 70a, the left portion 20a of the film leader 20 is urged by the separation claw 70a and as a result, the film leader 20 maintains the curled state. Accordingly, even if the roll of film 12 is slightly twisted, it does not happen that the left portion 20a of the film leader 20 is free and climbs over the guide projection 24. When the spool 14 is rotated from the foregoing state, the roll of film 12 is rotated together with the spool 14, and the film leader 20 is separated from the roll of film 12 by the afore mentioned operation so as to be advanced outside from the film passage mouth. The film leader end 70 is not necessarily required to be cut diagonally. For example, it may be cut into a linear-shape perpendicular to the advancing direction of the film, or only a portion corresponding to the separation claw 70a may be protruded in a trapezoid-shape.

The present invention can be utilized not only to the self-advancing film cassette having a mechanism for preventing a roll of film from being loosened, but also to a self-advancing film cassette described in USP 4,834,306, USP 4,846,418, etc.

While several embodiments of the present invention have been shown and described, it would be apparent to those skilled in the art that many changes and modifications are possible without departing from the inventive concept as defined in the appendent claims.

## Claims

1. A self-advancing film cassette comprising a spool (14), a film roll (12) of a photographic film (15) wound around said spool (14), a cassette shell (13, 32, 51) for rotatably supporting said spool (14), prevention means (16, 17, 30, 31) for preventing said film roll (12) from being loosened, said photographic film (15) being advanced through a film passage mouth (18a) formed in said cassette shell (13, 32, 51) and a separation claw (23a, 24a, 33, 70a) within said cassette shell (13, 32, 51) for separating an end (21, 43, 56, 57, 58, 71) of a film leader (20) from the roll of film (12),
**characterised in that**
said separation claw (23a, 24a, 33, 70a) is disposed outside the area of said photographic film (15) where a picture frame (26) is formed,
a guide projection (23, 24) is formed on an inner surface of a port portion (18) of said cassette shell (13, 32, 51) adjacent to said separation claw (23a, 24a, 33, 70a) and extending towards said film passage mouth (18a), said guide projection (23, 24) being provided outside said picture frame area on the same side of the port portion (18) as the separation claw (23a, 24a, 33, 70a), and
a groove (23b) is formed in a base portion of said separation claw (23a, 24a, 33, 70a) so as to provide a springy characteristic to said separation claw (23a, 24a, 33, 70a), such that said separation claw (23a, 24a, 33, 70a) is biased toward said film roll (12).

2. A self-advancing film cassette as claimed in claim 1, **characterized in that** a pair of separation claws (23a, 24a, 33, 70a) is disposed within said cassette shell (13, 32, 51).

3. A self-advancing film cassette as claimed in claim 1 or 2, **characterized in that** said prevention means (16, 17, 30, 31) is a pair of ring-like ridges (16, 17), at least a portion of each of said ridges (16, 17) on the extension of said film passage mouth (18a) being cut, said ridges (16, 17) being formed on the inner side of said cassette shell (13) so that said ridges (16, 17) are disposed outside the area of said photographic film (15) where said picture frame (26) is formed.

4. A self-advancing film cassette as claimed in claim 3, **characterized in that** said ridges (16, 17) are disposed in such a manner as to face with perforations (27) formed in both sides of said photographic film (15).

5. A self-advancing film cassette as claimed in claim 3 or 4, **characterized in that** said separation claw (70a) is disposed beside said ridges (16, 17) and projects beyond said ridges (16, 17).

6. A self-advancing film cassette as claimed in claim 3 or 4, **characterized in that** said separation claw (23a, 24a, 33) is formed integrally with said ridges (16, 17).

7. A self-advancing film cassette as claimed in at least one of claims 1 to 6, **characterized in that** the width of said separation claw (23a, 24a, 33, 70a) is larger than that of said perforation (27).

8. A self-advancing film cassette as claimed in at least one of claims 1 to 7, **characterized in that** the contact position between the tip of said separation claw (23a, 24a, 33, 70a) and the front of said film leader end (21, 71) is 1/3 or more of the film thickness when measured from the outer surface of said photographic film (15).

9. A self-advancing film cassette as claimed in at least one of claims 1 to 8, **characterized in that** a radius of curvature (R) of the tip of the separation claw (23a, 24a, 33, 70a) contacting the front of the film leader end (21, 71) is set in a range between 0.04mm to a half of a thickness (D₃) of the film (15).

10. A self-advancing film cassette as claimed in at least one of claims 1 to 9, **characterized in that** an angle θ between said separation claws (23a, 24a, 33, 70a) and a second outermost layer (12b) of the film roll (12) is set in a range from 0 to Π/6.

11. A self-advancing film cassette as claimed in at least one of claims 1 to 10, **characterized in that** the end (21) of said film leader (20) is provided with a projection (41) at a portion corresponding to said separation claw (23a, 24a, 33, 70a).

12. A self-advancing film cassette as claimed in at least one of claims 1 to 11, **characterized in that** the end (71) of said film leader (20) is cut into a state inclining from one side of said photographic film towards the other side thereof.

13. A self-advancing film cassette as claimed in at least one of claims 1 to 12, **characterized in that** cuts (71a, 71b) are formed in both sides of said film leader end (71) so as to be free from said loosening prevention means (16, 17).

14. A self-advancing film cassette as claimed in at least one of claims 1 to 13, **characterized in that** said film leader (20) is formed narrow in width so as to be free from said loosening prevention means (16, 17, 30, 31).

15. A self-advancing film cassette as claimed in at least one of claims 1 to 14, wherein said film leader (20) is subjected to deformation treatment or rigidity increasing treatment for prevention against being stuck to said film roll (12).

16. A self-advancing film cassette as claimed in at least one of claims 1 to 15, **characterized in that** the end (43) of said film leader (20) is cut diagonally from the upper surface toward the lower surface.

## Patentansprüche

1. Selbstzuführende Filmkassette mit einer Spule (14), einer Filmrolle (12) aus um die Spule (14) gewundenen fotografischen Film (15), einem Kassettengehäuse (13,32,51) zur drehbaren Lagerung der Spule (14), einer Hemmeinrichtung zur Verhinderung eines Lösens der Filmrolle (12), wobei der fotografische Film (15) durch eine im Kassettengehäuse (13,32,51) ausgebildete Filmdurchführungsöffnung (18a) vorschiebbar ist, und mit einer Trennklaue (23a,24a,33,70a) innerhalb des Kassettengehäuses (13,32,51) zum Abtrennen eines Endes (21,43,56,57,58,71) eines Filmanfangs (20) von der Rolle des Films (12), **dadurch gekennzeichnet**, daß diese Trennklaue (23a,24a,33,70a) außerhalb des Bereiches des fotografischen Films (15) angeordnet ist, in welchem ein Filmbild ausgebildet ist, ein Führungsvorsprung (23,24) an der inneren Oberfläche eines Öffnungsabschnittes (18) des Kassettengehäuses (13,32,51) angeordnet ist, der an der Trennklaue (23a,24a,33,70a) angrenzt und sich in Richtung der Filmdurchführungsöffnung (18a) erstreckt, wobei dieser Führungsvorsprung (23,24) außerhalb des Filmbildbereichs auf der gleichen Seite des öffnungsabschnittes (18) angeordnet ist wie die Trennklaue (23a,24a,33,70a), und daß in einem Basisabschnitt der Trennklaue (23a,24a,33,70a) eine Rille (23b) derart ausgebildet ist, daß sie der Trennklaue (23a,24a,33,70a) eine federnde Charakteristik verleiht, derart, daß die Trennklaue (23a,24a,33,70a) in Richtung der Filmrolle vorgespannt ist.

2. Selbstzuführende Filmkassette nach Anspruch 1, **dadurch gekennzeichnet**, daß ein Trennklauen-Paar (23a,24a,33,70a) innerhalb des Kassettengehäuses (13,32,51) angeordnet ist.

3. Selbstzuführende Filmkassette nach Anspruch 1 oder 2, **dadurch gekennzeichnet**, daß die Hemmeinrichtung (16,17,30,31) aus einem ringförmigen Verstärkungsrippenpaar (16,17) besteht, zumindest ein Abschnitt einer jeden dieser Verstärkungsrippen (16,17) an der Verlängerung der Filmdurchführungsöffnung (18) ausgeklinkt ist und die Verstärkungsrippen (16,17) auf der Innenseite des Kassettengehäuses (13) derart ausgebildet sind, daß diese Verstärkungsrippen (16,18) außerhalb des Bereiches des fotografischen Films (15) angeordnet sind, in welchem das Filmbild ausgebildet ist.

4. Selbstzuführende Filmkassette nach Anspruch 3, **dadurch gekennzeichnet**, daß die Verstärkungsrippen (16,17) so angeordnet sind, daß sie an beiden Seiten des fotografischen Films (15) ausgebildeten Perforierungen (27) gegenüberliegen.

5. Selbstzuführende Filmkassette nach Anspruch 3 oder 4, **dadurch gekennzeichnet**, daß die Trennklaue (70a) neben den Verstärkungsrippen (16,17) angeordnet ist und über diese Verstärkungsrippen (16,17) hervorspringt.

6. Selbstzuführende Filmkassette nach Anspruch 3 oder 4, **dadurch gekennzeichnet**, daß die Trennklaue (23a,24a,33,70a) einstückig mit diesen Verstärkungsrippen (16,17) ausgebildet ist.

7. Selbstzuführende Filmkassette nach mindestens einem der Ansprüche 1 bis 6, **dadurch gekennzeichnet**, daß die Breite dieser Trennklaue (23a,24a,33,70a) größer ist als diejenige der Perforierung (27).

8. Selbstzuführende Filmkassette nach mindestens einem der Ansprüche 1 bis 7, **dadurch gekennzeichnet**, daß die Berührungsposition zwischen der Spitze der Trennklaue (23a,24a,33,70a) und dem vorderen Bereich des einen Endes (21,71) des Filmanfangs 1/3 oder mehr der Filmstärke beträgt, wenn von der äußeren Oberfläche des fotografischen Films (15) gemessen wird.

9. Selbstzuführende Filmkassette nach mindestens einem der Ansprüche 1 bis 8, **dadurch gekennzeichnet**, daß der Rundungsradius (R) der Spitze der Trennklaue (23a,24a,33,70a), die den Vorderabschnitt des Endes (21,71) des Filmanfangs berührt, einen Wert hat von 0,04 mm bis zur Hälfte der Stärke (D₃) des Films (15).

10. Selbstzuführende Filmkassette nach mindestens einem der Ansprüche 1 bis 9, **dadurch gekennzeichnet**, daß der Winkel θ zwischen den Trennklauen (23a,24a,33,70a) und einer zweiten, am weitesten außenliegenden Lage (12b) der Filmrolle (12) 0 bis π/6 beträgt.

11. Selbstzuführende Filmkassette nach mindestens einem der Ansprüche 1 bis 10, **dadurch gekennzeichnet**, daß das Ende (21) des Filmanfangs (20) mit einem Vorsprung (41) an einem Bereich versehen ist, der der Trennklaue (23a,24a,33,70a) entspricht.

12. Selbstzuführende Filmkassette nach mindestens einem der Ansprüche 1 bis 11, **dadurch gekennzeichnet**, daß das Ende (71) des Filmanfangs (20) derart abgeschnitten ist, daß es ausgehend von einer Seite des fotografischen Films in Richtung dessen anderer Seite geneigt verläuft.

13. Selbstzuführende Filmkassette nach mindestens einem der Ansprüche 1 bis 12, **dadurch gekennzeichnet**, daß zu beiden Seiten des Endes (71) des Filmanfangs Ausklinkungen (71a,71b) angeordnet sind, um frei von der Hemmeinrichtung (16,17) gegen das Lösen zu sein.

14. Selbstzuführende Filmkassette nach mindestens einem der Ansprüche 1 bis 13, **dadurch gekennzeichnet**, daß der Filmanfang (20) mit kleiner werdender Weite ausgebildet ist, um frei von der Hemmeinrichtung (16,17,30,31) gegen das Lösen zu sein.

15. Selbstzuführende Filmkassette nach mindestens einem der Ansprüche 1 bis 14, **dadurch gekennzeichnet**, daß der Filmanfang (20) einer Deformierungs- oder Festigkeitserhöhungs-Behandlung unterzogen ist, um zu verhindern, gegen die Filmrollen (12) angeklebt zu werden.

16. Selbstszuführende Filmkassette nach mindestens einem der Ansprüche 1 bis 15, **dadurch gekennzeichnet**, daß das Ende (43) des Filmanfangs (20) von der oberen Oberfläche in Richtung der unteren Oberfläche schräg abgeschnitten ist.

## Revendications

1. Cassette de film à avancement automatique comprenant une bobine (14), un rouleau (12) de film photographique (15) enroulé autour de ladite bobine (14), une coque de cassette (13, 32, 51) servant à supporter ladite bobine (14) mobile en rotation, des moyens d'interdiction (16, 17, 30, 31) servant à empêcher ledit rouleau de film (12) de se desserrer, ledit film photographique (15) étant avancé à travers une bouche (18a) de passage de film formée dans ladite coque de cassette (13, 32, 51) et une griffe de séparation (23a, 24a, 33, 70a) logée dans ladite coque de cassette (13, 32, 51) pour séparer une extrémité (21, 43, 56, 57, 58, 71) d'une amorce de film (20) du rouleau de film (12),
caractérisée en ce que
la griffe de séparation (23a, 24a, 33, 70a) est disposée à l'extérieur de la zone du film photographique (15) dans laquelle une image (26) est formée,
une saillie de guidage (23, 24) est formée sur une surface intérieure d'une portion à orifice (18) de ladite coque de cassette (13, 32, 51), à proximité de ladite griffe de séparation (23a, 24a, 33, 70), et s'étendant vers ladite bouche (18a) de passage du film, ladite saillie de guidage (23, 24) étant prévue en dehors de la zone des images sur le même côté de la portion à orifice (18) que la griffe de séparation (23a, 24a, 33, 70a), et
une gorge (23b) est formée dans la portion de base de ladite griffe de séparation (23a, 24a, 33, 70a) pour conférer une caractéristique élastique à ladite griffe de séparation (23a, 24a, 33, 70a), de manière que ladite griffe de séparation (23a, 24a, 33, 70a) soit sollicitée vers ledit rouleau de film (12).

2. Cassette de film à avancement automatique selon la revendication 1, caractérisée en ce que deux griffes de séparation (23a, 24a, 33, 70a) sont disposées à l'intérieur de ladite coque (13, 32, 51) de la cassette.

3. Cassette de film à avancement automatique selon la revendication 1 ou 2, caractérisée en ce que lesdits moyens de prévention (16, 17, 30, 31) sont constitués par une paire de nervures annulaires (16, 17), au moins une portion de chacune desdites nervures (16, 17) située sur le prolongement de ladite bouche (18a) de passage du film étant coupée, lesdites nervures (16, 17) étant formées sur le côté intérieur de ladite coque (13) de la cassette, de sorte que lesdites nervures (16, 17) sont disposées à l'extérieur de la zone dudit film photographique (15) où l'image (26) se forme.

4. Cassette de film à avancement automatique selon la revendication 3, caractérisée en ce que lesdites nervures (16, 17) sont disposées de manière à faire face aux perforations (27) formées dans les deux côtés du film photographique (15).

5. Cassette de film à avancement automatique selon la revendication 3 ou 4, caractérisée en ce que ladite griffe de séparation (70a) est disposée à côté desdites nervures (16, 17) et fait saillie au-delà desdites nervures (16, 17).

6. Cassette de film à avancement automatique selon la revendication 3 ou 4, caractérisée en ce que ladite griffe de séparation (23a, 24a, 33) est formée en une seule pièce avec lesdites nervures (16, 17).

7. Cassette de film à avancement automatique selon au moins une des revendications 1 à 6, caractérisée en ce que la largeur de ladite griffe de séparation (23a, 24a, 33, 70a) est plus grande que celle de ladite perforation (27).

8. Cassette de film à avancement automatique selon au moins une des revendications 1 à 7, caractérisée en ce que la position de contact entre la pointe de ladite griffe de séparation (23a, 24a, 33, 70a) et l'avant de ladite extrémité (21, 71) de l'amorce du film est 1/3 ou plus de l'épaisseur du film, mesurée à partir de la surface extérieure dudit film photographique (15).

9. Cassette de film à avancement automatique selon au moins une des revendications 1 à 8, caractérisée en ce que le rayon de courbure (R) de la pointe de la griffe de séparation (23a, 24a, 33, 70a) qui entre en contact avec l'avant de l'extrémité (21, 71) de l'amorce du film est fixée dans un intervalle compris entre 0,04 mm et la moitié de l'épaisseur (D₃) du film (15).

10. Cassette de film à avancement automatique selon au moins une des revendications 1 à 9, caractérisée en ce qu'un angle θ entre lesdites griffes de séparation (23a, 24a, 33, 70a) et une deuxième couche extrême extérieure (12b) du rouleau de film (12) est fixée à un intervalle de 0 à π/6.

11. Cassette de film à avancement automatique selon au moins une des revendications 1 à 10, caractérisée en ce que l'extrémité (21) de ladite amorce (20) du film est munie d'une saillie (41) au droit d'une portion qui correspond à ladite griffe de séparation (23a, 24a, 33, 70a).

12. Cassette de film à avancement automatique selon au moins une des revendications 1 à 11, caractérisée en ce que l'extrémité (71) de ladite amorce (20) du film est coupée dans un état incliné d'un côté dudit film photographique vers l'autre côté de ce film.

13. Cassette de film à avancement automatique selon au moins une des revendications 1 à 12, caractérisée en ce que des encoches (71a, 71b) sont formées dans les deux côtés de ladite extrémité (71) de l'amorce du film de manière à être dégagée desdits moyens (16, 17) de prévention du desserrage.

14. Cassette de film à avancement automatique selon au moins une des revendications 1 à 13, caractérisée en ce que ladite amorce (20) du film est rétrécie en largeur de manière à être libérée desdits moyens (16, 17, 30, 31) de prévention du desserrage.

15. Cassette de film à avancement automatique selon au moins une des revendications 1 à 14, caractérisée en ce dans laquelle ladite amorce (20) du film est soumise à un traitement de déformation ou à un traitement d'accroissement de la rigidité pour empêcher cette amorce de se coller sur le rouleau de film (12).

16. Cassette de film à avancement automatique selon au moins une des revendications 1 à 15, caractérisée en ce que l'extrémité (43) de ladite amorce (20) du film est coupée en diagonale de la surface supérieure vers la surface inférieure.
